**Europäisches Patentamt**

**European Patent Office**

**Office européen des brevets**

(19)

(11) Numéro de publication: **0 172 100**
**B1**

(12)

# FASCICULE DE BREVET EUROPEEN

(45) Date de publication du fascicule du brevet:
**07.12.88**

(21) Numéro de dépôt: **85401574.0**

(22) Date de dépôt: **01.08.85**

(51) Int. Cl.⁴: **F 16 F  15/12, F 16 D  13/68**

(54) **Dispositif amortisseur de torsion à grand débattement angulaire, en particulier friction d'embrayage, notamment pour véhicule automobile.**

(30) Priorité: **03.08.84  FR 8412293**

(43) Date de publication de la demande:
**19.02.86 Bulletin 86/8**

(45) Mention de la délivrance du brevet:
**07.12.88 Bulletin 88/49**

(84) Etats contractants désignés:
**DE GB**

(56) Documents cités:
**FR-A- 2 386 729**
**FR-A- 2 503 295**
**FR-A- 2 539 194**

(73) Titulaire: **VALEO, 64 Avenue de la Grande Armée,**
**F-75017 Paris (FR)**

(72) Inventeur: **Carmillet, Roger, 74 Rue Championnet,**
**F-75018 Paris (FR)**
Inventeur: **Graton, Michel, 7 Bd Mortier, F-75020 Paris (FR)**
Inventeur: **Bacher, Michel, 14 Rue du Clos David,**
**F-95580 Andilly (FR)**

(74) Mandataire: **CABINET BONNET-THIRION, 95 Boulevard Beaumarchais, F-75003 Paris (FR)**

ACTORUM AG

**Description**

La présente invention concerne d'une manière générale les dispositifs amortisseurs de torsion comportant au moins deux parties coaxiales montées rotatives l'une par rapport à l'autre dans les limites d'un débattement angulaire déterminé et à l'encontre de moyens élastiques, communément dits moyens élastiques à action circonférentielle, aptes à agir circonférentiellement entre elles pour une plage au moins d'un tel débattement angulaire, à savoir, une première partie comportant, d'une part, un moyeu, et, d'autre part, un flasque, communément dit voile de moyeu, qui forme une pièce annulaire autour du moyeu, et qui pour un sens circonférentiel au moins, est solidaire en rotation de ce moyeu, et une deuxième partie comportant elle-même au moins un flasque, communément dit rondelle de guidage, qui forme lui aussi une pièce annulaire autour du moyeu, mais qui est libre en rotation par rapport à celui-ci tant dans un sens circonférentiel que dans le sens circonférentiel opposé.

Ainsi qu'on le sait, un tel dispositif amortisseur de torsion entre usuellement dans la constitution d'une friction d'embrayage, notamment pour véhicule automobile, celle de ses parties rotatives qui comporte au moins une rondelle de guidage portant alors un disque de friction destiné à être solidarisé en rotation avec un premier arbre, en pratique un arbre menant, l'arbre de sortie du moteur dans le cas d'un tel véhicule automobile, tandis que par son moyeu, l'autre de ces parties rotatives est adaptée a être solidarisée en rotation avec un deuxième arbre, en pratique un arbre mené, l'arbre d'entrée d'une boîte de vitesses dans le cas concerné d'un tel véhicule automobile.

Il est en effet ainsi avantageusement possible d'assurer une transmission régulée d'un couple de rotation d'un de ces arbres à l'autre, c'est-à-dire de filtrer les vibrations susceptibles de prendre naissance tout au long de la chaîne cinématique sur laquelle interviennent lesdits arbres, qui va du moteur aux arbres de roue dans le cas d'un véhicule automobile.

En pratique, deux rondelles de guidage sont prévues, qui, établies axialement à distance l'une de l'autre, parallèlement l'une à l'autre, chacune respectivement de part et d'autre du voile de moyeu, sont reliées l'une à l'autre par des entretoises axiales traversant ledit voile de moyeu à la faveur d'évidements ménagés à cet effet dans celui-ci.

L'un des problèmes à résoudre dans la réalisation des dispositifs amortisseurs de torsion de ce genre résulte de la nécessité qu'il y a à concilier deux exigences au moins apparemment contradictoires.

La première de ces exigences a trait au fait que, pour la minimisation, voire l'élimination, de certains bruits, et, plus précisément, des bruits communément dits bruits de «trash» apparaissant par exemple lorsque le conducteur du véhicule concerné enfonce la pédale d'accélérateur ou relâche celle-ci et dus à un entrechoquement, entre eux, et sous couple, des pignons de la boîte de vitesses dudit véhicule, il apparaît souhaitable, ainsi que l'expérience le confirme, que les moyens élastiques à action circonférentielle les premiers à intervenir entre les deux parties coaxiales constitutives d'un tel dispositif amortisseur de torsion présentent une raideur relativement faible, en pratique au plus égale à 1 m · daN par degré.

Corollairement, une deuxième exigence normalement à satisfaire, et, elle, impérative, est que, au terme du débattement angulaire entre lesdites parties rotatives, le couple maximal admissible soit supérieur aux couples moteurs maximaux les plus usuels.

Or ceux-ci sont fréquemment de l'ordre de 15 à 17 m · daN.

Par mesure de sécurité, il est donc souhaitable que le couple maximal transmissible entre les deux parties coaxiales d'un dispositif amortisseur de torsion du genre concerné soit de l'ordre par exemple de 20 m · daN.

Or, dans les dispositifs amortisseurs de torsion de ce genre connus à ce jour, le débattement angulaire maximal possible entre lesdites parties coaxiales est limité.

Ce débattement angulaire trouve en effet sa limite dans l'extension circonférentielle qu'il est possible de donner aux évidements ménagés dans le voile de moyeu pour le passage des entretoises axiales reliant l'une à l'autre les deux rondelles de guidage.

Au-delà d'une certaine extension circonférentielle, ces évidements ne pourraient qu'amoindrir de manière rédhibitoire la résistance mécanique du voile de moyeu, au préjudice de la longévité de l'ensemble.

En pratique, dans les dispositifs amortisseurs de torsion du genre concerné connus à ce jour, le débattement angulaire entre les deux parties coaxiales en cause est le plus souvent au plus égal à 10 degrés.

Si donc, pour une minimisation des bruits de «trash», on met en œuvre, entre ces deux parties, des moyens élastiques à action circonférentielle ne présentant d'abord qu'une raideur modérée, de l'ordre de 1 m · daN par degré par exemple, comme indiqué ci-dessus, le couple maximal admissible, au terme de leur débattement angulaire, est au plus de l'ordre de 10 m · daN, ce qui est insuffisant.

La présente invention a d'une manière générale pour objet une disposition permettant de surmonter cette difficulté, et, par là, de satisfaire aux exigences opposées à concilier.

De manière plus précise, elle a pour objet un dispositif amortisseur de torsion, notamment pour véhicule automobile, du genre comportant au moins deux parties coaxiales montées rotatives l'une part rapport à l'autre dans les limites d'un débattement angulaire déterminé et à l'encontre de moyens élastiques, dits moyens élastiques à action circonférentielle, aptes à agir circonférentiellement entre elles pour une plage au moins d'un tel débattement angulaire, à savoir

une première partie comportant, d'une part, un moyeu, et, d'autre part, un flasque, communément dit voile de moyeu, qui forme une pièce annulaire autour du moyeu, et qui, pour un sens circonférentiel au moins, est solidaire en rotation dudit moyeu, et une deuxième partie comportant elle-même au moins un flasque, communément dit rondelle de guidage, qui forme lui aussi une pièce annulaire autour du moyeu, mais qui est libre en rotation par rapport à celui-ci, tant dans un sens circonférentiel que dans le sens circonférentiel opposé, caractérisé en ce que, au flasque constituant le voile de moyeu de la première partie, il est associé au moins un autre flasque, dit ici par simple commodité contre-voile de moyeu, qui, comme ledit voile de moyeu, forme une pièce annulaire autour du moyeu et est solidaire en rotation de celui-ci pour un sens circonférentiel au moins, et en ce que, suivant une disposition alternée, ledit voile de moyeu et ledit contre-voile de moyeu sont l'un et l'autre libres en rotation par rapport au moyeu dans le sens circonférentiel opposé à celui pour lequel ils sont chacun respectivement solidaires en rotation de celui-ci, en sorte que, pour un sens circonférentiel, ledit voile de moyeu est solidaire en rotation du moyeu tandis que ledit contre-voile de moyeu est libre en rotation par rapport à celui-ci, et que, inversement, pour le sens circonférentiel opposé au précédent, ledit voile de moyeu est libre en rotation par rapport au moyeu tandis que ledit contre-voile de moyeu est solidaire en rotation de celui-ci, et en ce que les moyens élastiques à action circonférentielle mis en œuvre sont aptes à agir entre le contre-voile de moyeu et la rondelle de guidage aussi bien qu'entre le voile de moyeu et cette rondelle de guidage.

Autrement dit, suivant l'invention, il est procédé, d'une part, à une libération relative, dans un sens circonférentiel, du voile de moyeu par rapport au moyeu, et, d'autre part, et conjointement, à un doublage de ce voile de moyeu par contre-voile de moyeu, avec une intervention différenciée, suivant le sens circonférentiel, de ce voile de moyeu et de ce contre-voile de moyeu.

L'originalité d'une telle disposition apparaîtra mieux si l'on souligne que, usuellement, à ce jour, dans les dispositifs amortisseurs de torsion du genre concerné, le voile de moyeu est unique et est solidaire en rotation du moyeu pour l'un et l'autre des sens circonférentiels.

Quoi qu'il en soit, le voile de moyeu intervenant, et lui seul, dans un premier sens circonférentiel, tandis que le contre-voile de moyeu intervient, à son tour, et lui seul, dans le sens circonférentiel opposé au précédent, il est avantageusement possible, suivant l'invention, de répartir entre ces deux pièces de débattement angulaire global à assurer entre les deux parties coaxiales constitutives du dispositif amortisseur de torsion concerné, et, partant, les conditions, notamment mécaniques, étant égales par ailleurs, d'obentir, entre lesdites parties coaxiales, un débattement angulaire maximal largement supérieur à celui normalement admissible dans les dispositifs amortisseurs de torsion de ce genre connus à ce jour.

En pratique, grâce à la disposition suivant l'invention, ce débattement angulaire peut sans difficulté être de l'ordre par exemple de 20°.

Il en résulte, avantageusement, qu'il est dès lors possible, comme recherché, de mettre en œuvre entre les deux parties coaxiales constitutives du dispositif amortisseur de torsion concerné des moyens élastiques à action circonférentielle ne présentant, au début du débattement angulaire entre lesdites parties coaxiales, qu'une raideur modérée, de l'ordre, par exemple, pour fixer les idées, de 1 m · daN par degré.

Les caractéristiques et avantages de l'invention ressortiront d'ailleurs de la description qui va suivre, à titre d'exemple, en référence aux dessins schématiques annexés sur lesquels:

la figure 1 est une vue partielle en élévation d'un dispositif amortisseur de torsion suivant l'invention, suivant la flèche I de la figure 2;

la figure 2 en est une vue en coupe axiale, suivant la ligne brisée II-II de la figure 1;

la figure 3 en est une vue en coupe transversale, suivant la ligne III-III de la figure 2;

les figures 4, 5 sont des vues partielles en élévation, la première du voile de moyeu, et la deuxième d'un contre-voile de moyeu mis en œuvre dans le dispositif amortisseur de torsion suivant l'invention, ledit voile de moyeu et ledit contre-voile de moyeu y étant représentés isolément;

la figure 6 est, supposée développée à plat, une vue en coupe circonférentielle du dispositif amortisseur de torsion suivant l'invention, suivant la ligne VI-VI de la figure 3;

les figures 7A, 7B et 8A, 8B sont des vues qui, analogues à celle de la figure 6, illustrent diverses phases de fonctionnement du dispositif amortisseur de torsion suivant l'invention.

Ces figures illustrent, à titre d'exemple, l'application de l'invention à une friction d'embrayage, notamment pour véhicule automobile.

Globalement, le dispositif amortisseur de torsion que constitue cette friction d'embrayage comporte, dans la forme de réalisation représentée, deux parties coaxiales A, B montées rotatives l'une par rapport à l'autre, dans les limites d'un débattement angulaire déterminé, et à l'encontre de moyens élastiques, dits moyens élastiques à action circonférentielle, aptes à agir circonférentiellement entre elles pour une plage au moins d'un tel débattement angulaire.

La partie A, ou première partie, comporte un moyeu 10 destiné à être calé en rotation sur un arbre, non représenté, en pratique l'arbre d'entrée de la boîte de vitesse du véhicule concerné, formant arbre mené.

Par exemple, et tel que représenté, l'alésage interne 11 de ce moyeu 10, est, pour ce faire, cannelé.

La partie A comporte, en outre, un flasque 12, communément dit voile de moyeu, qui forme transversalement une pièce annulaire autour du moyeu 10, et qui, pour un sens circonférentiel au moins, et suivant des dispositions décrites plus en détail ultérieurement, est solidaire en rotation dudit moyeu 10.

Suivant l'invention, au flasque constituant ce voile de moyeu 12, il est associé au moins un autre flasque 12′, dit ici par simple commodité contre-voile de moyeu, qui, comme le dit voile de moyeu 12, forme transversalement une pièce annulaire autour du moyeu 10 et est solidaire en rotation de celui-ci pour un sens circonférentiel au moins, et, suivant une disposition alternée également détaillée ultérieurement, le dit voile de moyeu 12 et ledit contre-voile de moyeu 12′ sont l'un et l'autre libres en rotation par rapport au moyeu 10 dans le sens circonférentiel opposé à celui pour lequel ils sont chacun respectivement solidaires en rotation de celui-ci.

En pratique, dans la forme de réalisation représentée, il y a deux contre-voiles de moyeu 12′, qui sont disposés chacun respectivement de part et d'autre du voile de moyeu 12, et qui sont identiques l'un à l'autre.

Le voile de moyeu 12 présente, axialement, une ouverture 15, par laquelle il est engagé sur le moyeu 10, et, de même, les contre-voiles de moyeu 12′ présentent chacun, axialement, une ouverture 15′, par laquelle il sont eux aussi engagés sur ledit voile de moyeu 10.

Des moyens d'engrènement à jeu 17 sont prévus entre le moyeu 10 et le voile de moyeu 12.

Intervenant, dans la forme de réalisation représentée, à la faveur de l'ouverture 15 du voile de moyeu 12, ces moyens d'engrènement 17 comportent, dans cette forme de réalisation, d'une part, au moins une dent 18, qui est prévue radialement en saillie, à cet effet, sur la périphérie externe du moyeu 10, et, d'autre part, au moins une échancrure 19, qui est prévue à cet effet sur la tranche de ladite ouverture 15 du voile de moyeu 12, et par laquelle celui-ci est engagé, avec jeu, sur ladite dent 18 du moyeu 10.

Corollairement, et de manière semblable, des moyens d'engrènement à jeu 17′ sont prévus entre le moyeu 10 et chacun des contre-voiles de moyeu 12′, et ces moyens d'engrènement à jeu 17′ comportent au moins une dent 18′, qui est prévue radialement en saillie à cet effet sur la périphérie externe du moyeu 10 et au moins une échancrure 19′, qui est prévue sur la tranche de l'ouverture 15′ de chacun des contre-voiles de moyeu 12′, et par laquelle un tel contre-voile de moyeu 12′ est engagé, avec jeu, sur ladite dent 18′ du moyeu 10.

En outre, dans cette forme de réalisation, les dents 18, 18′ que présente ainsi radialement à sa périphérie externe le moyeu 10 sont situées en positions diamétralement opposées l'une par rapport à l'autre.

Pour son engagement, avec jeu, sur la dent 18′ de ce moyeu 10, le voile de moyeu 12 présente, sur la tranche de son ouverture 15, une échancrure 20, et, pour leur engagement, avec jeu, sur la dent 18 dudit moyeu 10, chacun des contre-voiles de moyeu 12′ présente, également, sur la tranche de l'ouverture 15′, une échancrure 20′.

Pour le voile de moyeu 12, les échancrures 19, 20 ont un même développement circonférentiel D1, et elles sont globalement en positions diamétralement opposées l'une par rapport à l'autre.

De même, pour chacun des contre-voiles de moyeu 12′, les échancrures 19′, 20′ ont un même développement circonférentiel D1, égal au précédent, et elles sont elles aussi globalement en position diamétralement opposées l'une par rapport à l'autre.

Il résulte de ce qui précède que, dans la forme de réalisation représentée, les moyens d'engrènement à jeu 17 entre le moyeu 10 et le voile de moyeu 12 comportent non seulement la dent 18 dudit moyeu 10, mais encore sa dent 18′, en coopération avec, respectivement, les échancrures 19, 20 dudit voile de moyeu 12, et, que, de même, les moyens d'engrènement à jeu 17′ entre le moyeu 10 et chacun des contre-voiles de moyeu 12′ comportent non seulement la dent 18′ dudit moyeu 10 mais encore sa dent 18, en coopération avec, respectivement, les échancrures 19′, 20′ d'un tel contre-voile de moyeu 12′.

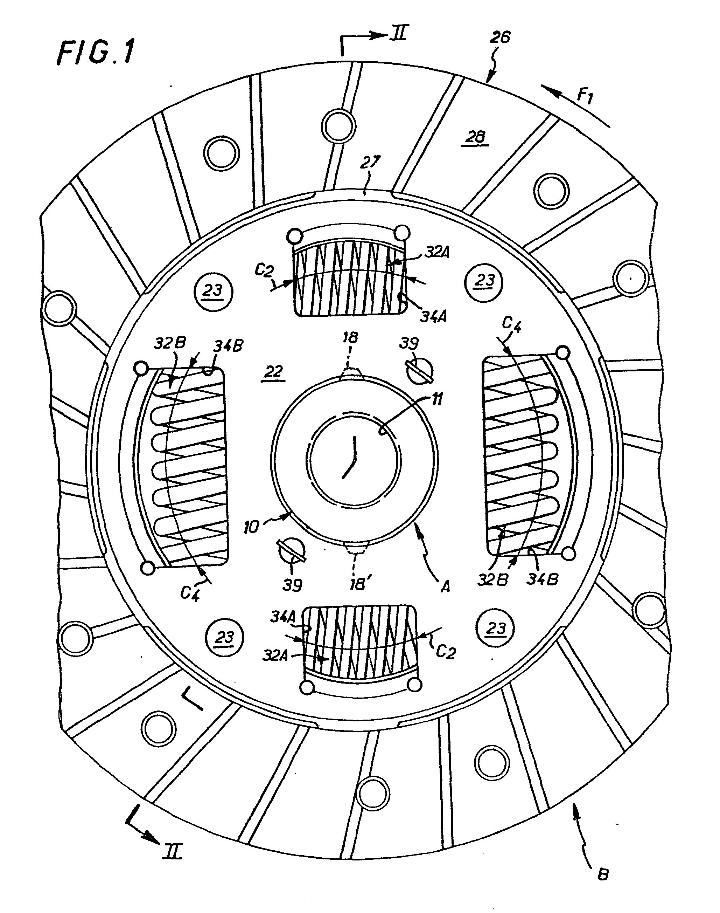

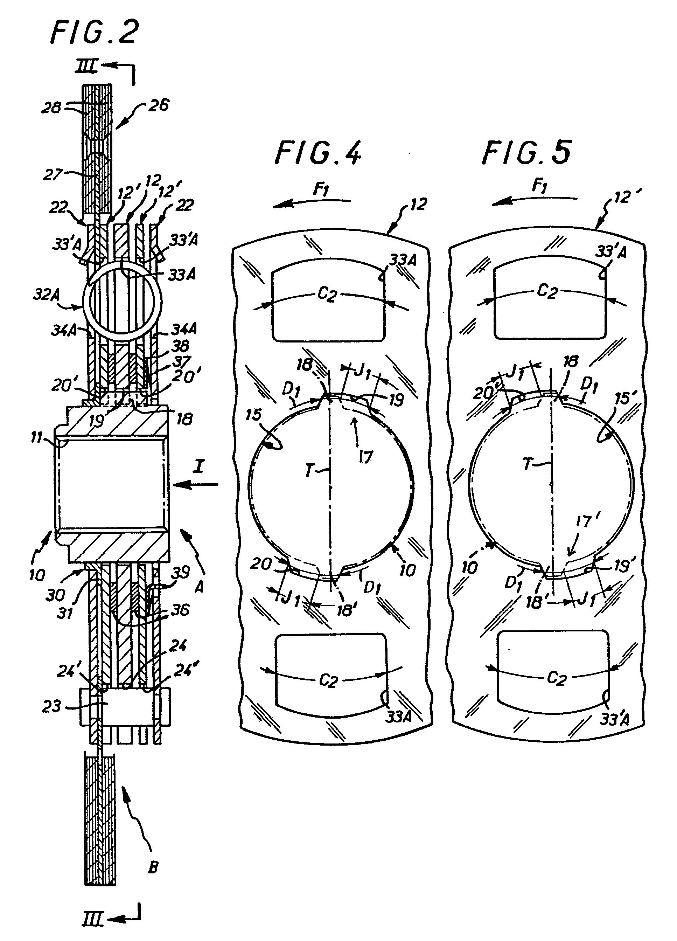

Pour la configuration de repos de l'ensemble, représentée sur les figures 1 à 6, les moyens d'engrènement à jeu 17 entre le moyeu 10 et le voile de moyeu 12 sont en butée circonférentielle pour un sens circonférentiel, et, conjointement, les moyens d'engrènement à jeu 17′ entre ledit moyeu 10 et chacun des contre-voiles de moyeu 12′ sont en butée circonférentielle pour le sens circonférentiel opposé au précédent.

Par exemple, et tel que représenté, pour le sens circonférentiel, repéré par une flèche F1 sur les figures 1 et 3 à 8, correspondant par exemple à une marche avant pour le véhicule, concerné, et à un fonctionnement en «tirage» de l'ensemble, le couple de rotation de l'arbre menant étant alors supérieur au couple de rotation de l'arbre mené, parce que le moteur entraîne le véhicule, ce sont les moyens d'engrènement à jeu 17′ entre le moyeu 10 et chacun des contre-voiles de moyeu 12′ qui sont en butée circonférentielle pour la configuration de repos de l'ensemble, les échancrures 19′, 20′ d'un tel contre-voile de moyeu 12′ étant alors circonférentiellement en appui contre, respectivement, les dents 18, 18′ du moyeu 10, par celui de leurs bords d'extrémité circonférentielle qui est en amont dans le sens circonférentiel concerné.

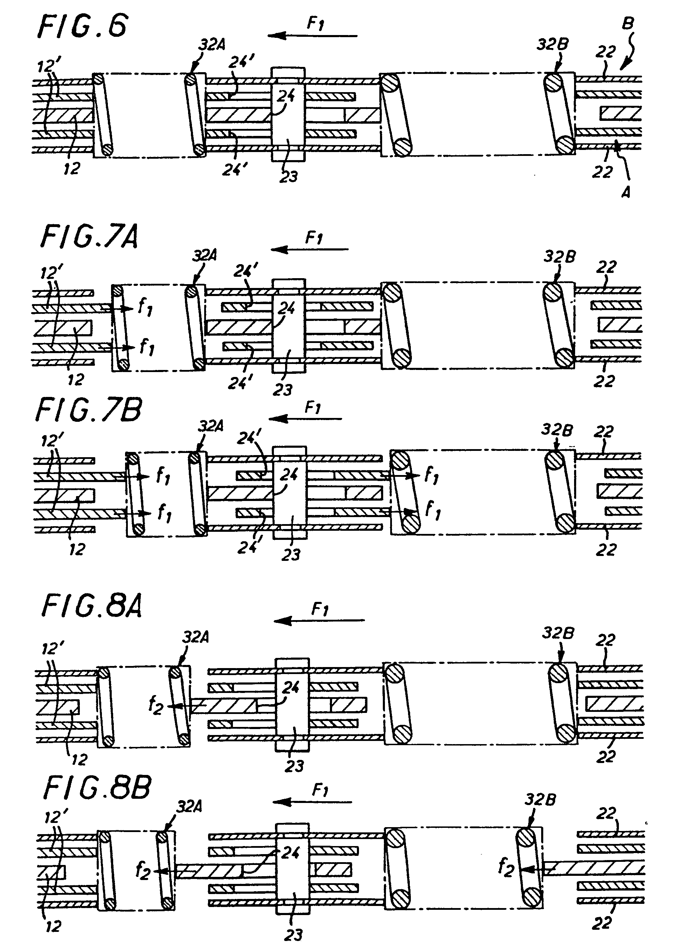

Soit J1 le jeu circonférentiel subsistant alors entre une telle dent 18, 18′ du moyeu 10 et l'autre des bords d'extrémité circonférentielle des échancrures 19′, 20′ de chacun des contre-voiles de moyeu 12′, figure 5.

Conjointement, dans ce cas, c'est pour le sens circonférentiel opposé que les moyens d'engrènement à jeu 17 entre le moyeu 10 et le voile de moyeu 12 sont en butée circonférentielle.

En effet, et tel que représenté, pour la configuration de repos de l'ensemble, le voile de moyeu 12 est circonférentiel en appui sur les dents 18, 18′ du moyeu 10 par celui des bords d'extrémité circonférentielle de ses échancrures 19, 20 qui est en amont dans le sens circonférentiellement opposé à celui repéré par la flèche F1 sur les figures 1 et 3 à 8.

Il subsiste alors circonférentiellement un jeu J1 le même que précédemment, entre ces dents 18, 18' du moyeu 10 et celui des bords d'extrémité circonférentielle des échancrures 19, 20 du voile de moyeu 12 qui est en aval dans ce sens circonférentiel.

Ce sens circonférentiel qui est donc le sens circonférentiel opposé à celui repéré par la flèche F1 sur les figures 1 et 3 à 8, correspond à un fonctionnement en «rétro» de l'ensemble, intervenant, ainsi qu'on le sait, lorsque le couple de rotation de l'arbre menant devient inférieur à celui de l'arbre mené, le véhicule entraînant alors vers le moteur.

Il en résulte de ce qui précède que, pour le sens circonférentiel repéré par la flèche F1 sur les figures 1 et 4 à 8, chacun des contre-voiles de moyeu 12' est solidaire en rotation du moyeu 10 tandis que le voile de moyeu 12 est libre en rotation par rapport à celui-ci, et que, pour le sens circonférentiel opposé au précédent, c'est, au contraire, le voile de moyeu 12 qui est solidaire en rotation du moyeu 10 tandis que chacun des contre-voiles de moyeu 12' est alors libre en rotation par rapport à ce dernier.

C'est en ce sens que, par rapport au moyeu 10, et tel qu'indiqué ci-dessus, il est établi une disposition alternée entre le voile de moyeu 12 et chacun des contre-voiles de moyeu 12' doublant celui-ci.

Il résulte également de ce qui précède que le voile de moyeu 12 et les contre-voiles de moyeu 12', ont une même découpe, ouvertures 15, 15' et échancrures 19–20, 19'–20' comprises, chacun des contre-voiles de moyeu 12' pouvant se déduire du voile de moyeu 12 par une rotation de 180° autour d'un diamètre T de l'ensemble passant par les dents 18, 18' du moyeu 10.

Pour plus de clarté, ce diamètre T est schématisé en traits interrompus sur les figures 4 et 5.

Bien entendu, les contre-voiles de moyeu 12' ont chacun une épaisseur inférieure à celle du voile de moyeu 12.

Mais, un même outil peut avantageusement être mis en œuvre pour la découpe de ces contre-voiles de moyeu 12' et pour celle du voile de moyeu 12.

Dans la forme de réalisation représentée, les dents 18, 18' ne s'étendent axialement que sur une portion de la longueur du moyeu 10, dans la zone médiane de celui-ci.

La partie B, ou deuxième partie, comporte, de manière connue en soi, au moins un flasque 22, communément dit rondelle de guidage, qui forme lui aussi une pièce annulaire autour du moyeu 10 mais qui est libre en rotation par rapport à celui-ci, tant dans un sens circonférentiel que dans le sens circonférentiel opposé.

En pratique, et de manière également connue en soi, il y a ainsi deux rondelles de guidage 22, qui sont disposées chacune respectivement de part et d'autre du voile de moyeu 12 et, en outre, des contre-voiles de moyeu 12', et qui sont solidarisées en rotation l'une avec l'autre par des entretoises axiales 23 traversant, avec jeu, des échancrures 24, 24' prévues à cet effet à la périphérie externe du voile de moyeu 12 et des contre-voiles de moyeu 12'.

Dans la forme de réalisation représentée, quatre entretoises axiales 23 sont ainsi prévues, sensiblement en X par rapport à l'axe de l'ensemble.

Suivant l'invention, chacune des échancrures 24, 24' peut avantageusement être au contact, par l'un de ses bords d'extrémité circonférentielle, de l'entretoise axiale 23 qui la traverse.

Pour le voile de moyeu 12, le bord d'extrémité circonférentielle d'une échancrure 24 qui est ainsi au contact de l'entretoise axiale 23 correspondante pour la configuration de repos de l'ensemble est celui qui est en aval pour le sens circonférentiel repéré par la flèche F1 sur les figures 1 et 3 à 8, et, suivant une disposition alternée du même ordre que la précédente pour une échancrure 24' de chacun des contre-voiles de moyeu 12', le bord d'extrémité circonférentielle qui est au contact de l'entretoise axiale 23 correspondante pour ladite configuration de repos de l'ensemble est celui qui est en amont dans le sens circonférentiel repéré par la dite flèche F1 sur les figures 1 et 3 à 8.

Pour une résistance mécanique donnée pour le voile de moyeu 12 et les contre-voiles de moyeu 12', les échancrures 24, 24' peuvent ainsi avoir une extension circonférentielle maximale.

En effet, et ainsi, qu'il apparaître ci-après, chaque voile ou contre-voile ne se trouve ainsi échancré que de la valeur nécessaire au débattement angulaire entre les parties A, B correspondant à un seul fonctionnement en «tirage» ou en «rétro» de l'ensemble, au lieu de l'être à la fois de la valeur correspondant à un tel fonctionnement en «tirage» et de la valeur correspondant à un tel fonctionnement en «rétro».

Soit J2 le jeu circonférentiel subsistant alors, pour la configuration de repos de l'ensemble, entre chaque entretoise axiale 23 et celui des bords d'extrémité circonférentielle des échancrures 24, 24' qu'elle traverse qui est à distance d'elle.

La partie B comporte, en outre, un disque de friction 26.

Son voile 27, qui peut être circulairement fractionné en pales, est accolé à l'une des rondelles de guidage 22, sur la face interne de celle-ci, et il est solidarisé à cette rondelle de guidage 22 par les entretoises axiales 23 solidarisant déjà en rotation celle-ci avec l'autre rondelle de guidage 22 à laquelle elle est associée.

A sa périphérie, le voile 27 de ce disque de friction 26 porte, axialement en saillie, et de part et d'autre, deux garnitures de frottement 28.

Par serrage de ces garnitures de frottement 28 entre deux plateaux à savoir un plateau de pression et un plateau de réaction, non représentés, la partie B est apte à être solidarisée en rotation avec un arbre.

Il s'agit en pratique d'un arbre menant.

Dans le cas, concerné, d'une friction d'embrayage pour véhicule automobile, il s'agit, plus précisément, de l'arbre de sortie du moteur d'un tel véhicule.

Pour le centrage de la partie B par rapport à la partie A, il est radialement interposé, entre l'une des rondelles de guidage 22 de la partie B et le moyeu 10 de la partie A, un palier 30.

En pratique, et tel que représenté, ce palier 30 est ainsi associé à celle des rondelles de guidage 22 à laquelle est accolé le voile 27 du disque de friction 26.

En pratique, également, il fait corps avec une collerette 31, qui, faisant radialement saillie en direction opposée à l'axe de l'ensemble, est axialement interposée entre la rondelle de guidage 22 concernée et le contre-voile de moyeu 12' proche de celle-ci.

En pratique, enfin, les rondelles de guidage 22 sont disposées axialement au-delà des dents 18, 18' du moyeu 10.

Les moyens élastiques à action circonférentielle interposés circonférentiellement entre les parties A, B ainsi constituées comportent une pluralité d'organes élastiques 32 répartis circulairement autour de l'axe de l'ensemble et disposés tous sensiblement tangentiellement par rapport à une même circonférence de celui-ci.

Dans là forme de réalisation représentée, il y a ainsi deux organes élastiques 32A, de relativement faible raideur, et, en alternance avec ceux-ci, suivant une disposition en croix, deux organes élastiques 32B, de raideur largement supérieure à la précédente.

Il s'agit, en pratique, de ressorts du type ressort à boudin.

Ces organes élastiques 32A, 32B sont chacun individuellement logés pour partie dans des évidements 33A, 33B–33'A, 33'B du voile de moyeu 12 et des contre-voiles de moyeu 12' et pour partie dans des évidements 34A, 34B des rondelles de guidage 22.

En pratique, ces évidements sont constitués par des fenêtres ménagées à cet effet dans les flasques concernés.

S'agissant des évidements 34A, 34B, ainsi ménagés dans les rondelles de guidage 22, celui des bords d'extrémité radiale d'un tel évidement qui est radialement le plus éloigné de l'axe de l'ensemble est bordé par une lèvre en auvent, pour la retenue de l'organe élastique 32A, 32B correspondant.

Pour l'un au moins de ceux-ci, et en pratique il en est ainsi pour l'un et l'autre des organes élastiques 32A de relativement faible raideur dans la forme de réalisation représentée, les évidements 33A, 33'A du voile de moyeu 12 et des contre-voiles de moyeu 12' ont un même développement circonférentiel C2 que celui des évidements correspondants 34A, 34B des rondelles de guidage 22.

Pour un autre au moins des organes élastiques 32A, 32B, et en pratique il en est ainsi pour l'un et l'autre des organes élastiques 32B de relativement plus forte raideur dans la forme de réalisation représentée, les évidements 33B, 33'B du voile de moyeu 12 et des contre-voiles de moyeu 12' ont un développement circonférentiel C3 supérieur à celui C4 des évidements correspondants 34B des rondelles de guidage 22, en sorte que, pour la configuration de repos de l'ensemble, et pour un sens circonférentiel au moins, c'est avec un jeu circonférentiel J3 que ces organes élastiques 32B sont chacun individuellement engagés dans les évidements 33B, 33'B du voile de moyeu 12 et des contre-voiles de moyeu 12'.

Suivant une disposition alternée du même ordre que la précédente, ce jeu circonférentiel J3, qui est en pratique le même pour le voile de moyeu 12 et pour les contre-voiles de moyeu 12', s'étend, pour ledit voile de moyeu 12, du côté aval des organes élastiques 32B concernés dans le sens circonférentiel opposé à celui repéré par la flèche F1 sur les figures 1 et 3 à 8, et, pour les contre-voiles de moyeu 12', il s'étend du côté aval de ces organes élastiques 32B pour le sens circonférentiel repéré par ladite flèche F1 sur ces figures 1 et 3 à 8, et donc du côté opposé au précédent.

Ainsi, les évidements 33B, 33'B ont une même longueur circonférentielle. Entre les parties A, B ainsi constitutives du dispositif amortisseur de torsion suivant l'invention interviennent, enfin, de manière connue en soi, des moyens de frottement.

Dans la forme de réalisation représentée, ceux-ci comportent outre la palier 30, celui-ci étant solidarisé en rotation à la rondelle de guidage 22 à laquelle il est associé, deux rondelles de frottement 36 disposées chacune respectivement de part et d'autre du voile de moyeu 12, entre celui-ci et les contre-voiles de moyeu 12' associés.

Une rondelle élastique 37, du type rondelle Belleville par exemple, interposée entre la rondelle de guidage 22 opposée à celle à laquelle sont associés le disque de friction 26 et le contre-voile de moyeu 12' proche de cette rondelle de guidage 22, sollicite axialement en serrage l'ensemble.

En pratique, une rondelle d'application 38, liée en rotation à cette rondelle de guidage 22 par des pattes 39 est interposée entre la rondelle élastique 37 et le contre-voile de moyeu 12' concerné.

Lorsque, en fonctionnement, pour une marche avant du véhicule concerné, un couple de rotation est appliqué à la partie B et donc aux rondelles de guidage 22 appartenant à celle-ci, ce sont, normalement, ces rondelles de guidage 22, qui, entraînées dans le sens de rotation de l'ensemble, tel que repéré par la flèche F1 sur les figures 1 et 3 à 8, ont tendance à entraîner, par l'intermédiaire des organes élastiques à action circonférentielle 32A, 32B en jeu, la partie A, et, donc, le moyeu 10 appartenant à cette dernière.

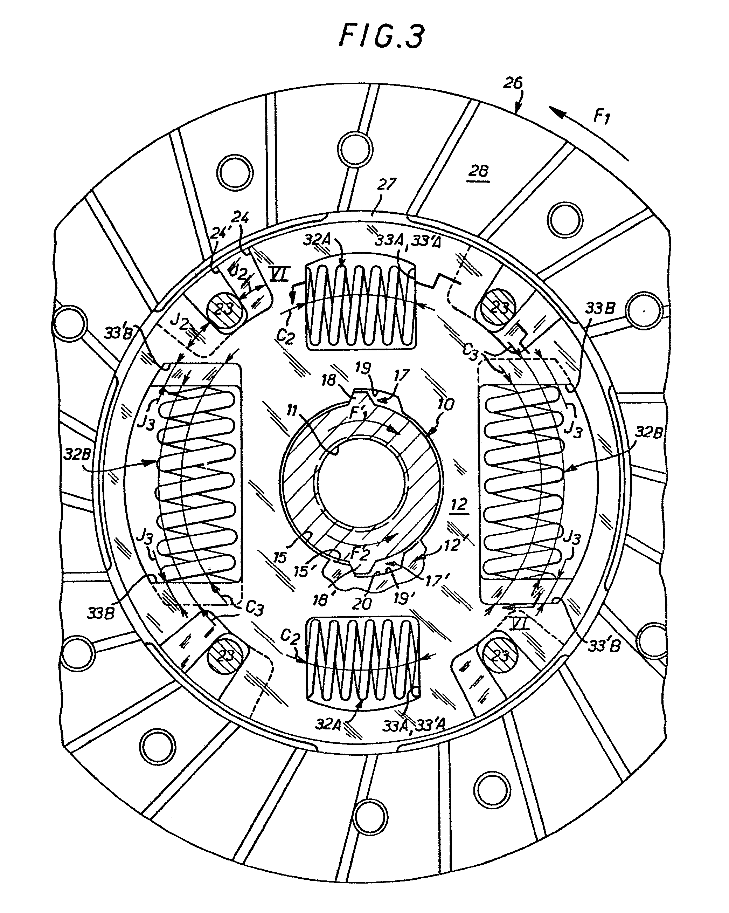

Pour simplifier l'exposé qui va suivre, on supposera cependant ici que, à l'inverse de ce processus, et s'agissant d'un fonctionnement en «tirage», c'est-à-dire d'un fonctionnement au cours duquel le couple de rotation de l'arbre menant est supérieur à celui de l'arbre mené, c'est le moyeu 10 qui, suivant un sens circonférentiel inverse du précédent, tel que repéré par la flèche F'1 sur la figure 3, a tendance à entraîner, par l'intermédiaire des organes élastiques à action circonférentielle 32A, 32B, les rondelles de guidage 22.

Sur les figures 6 à 8, ces rondelles de guidage 22 sont donc supposées immobiles.

S'agissant, donc, d'un fonctionnement en «tirage», comme indiqué ci-dessus, le moyeu 10 entraîne immédiatement, par ses dents 18, 18', les contre-voiles de moyeu 12', tel que schématisé par des flèches F1 sur les figures 7A, 7B.

Dans un premier temps, figure 7A, seuls cèdent d'abord élastiquement les organes élastiques 32A, les ressorts constituant ceux-ci présentant en effet, comme mentionné ci-dessus, une raideur relativement faible, très inférieure en tout cas à celle des organes élastiques 32B.

Dans un deuxième temps, figure 7B, les organes élastiques 32B cèdent à leur tour élastiquement, en ajoutant leurs effets à ceux des organes élastiques 32A, qui restent comprimés.

Pendant tout le processus correspondant, qui correspond donc à un fonctionnement en «tirage» de l'ensemble, le voile de moyeu 12 est inactif, compte tenu du jeu circonférentiel J1 correspondant, seuls intervenant, comme décrit ci-dessus, les contre-voiles de moyeu 12'.

Le processus décrit se poursuit jusqu'à ce qu'il se produise un appui positif, pour le sens circonférentiel concerné, entre la partie B et la partie A, soit que certains au moins des organes élastiques 32A, 32B intervenant entre elles viennent alors à spires jointives, soit que l'une au moins des entretoises axiales 23 vienne au contact du bord d'extrémité circonférentielle correspondant des échancrures 24' des contre-voiles de moyeu 12' qu'elle traverse.

Si, à un quelconque instant, passant d'un fonctionnement en «tirage» à un fonctionnement dit en «rétro», le couple entre les parties B et A s'inverse, le couple moteur devenant inférieur au couple résistant, un processus inverse du précédent se développe, avec, d'abord, une détente des organes élastiques 32B, puis une détente des organes élastiques 32A.

Cette détente est en pratique quasi instantanée.

Elle correspond à une rotation rétrograde du moyeu 10 par rapport aux rondelles de guidage 22, tel que repéré par la flèche F'2 sur la figure 3.

Autrement dit, au cours d'un tel fonctionnement en «rétro» et alors que l'ensemble continue, évidemment, s'agissant toujours d'une marche avant du véhicule concerné, à tourner dans le sens circonférentiel repéré par la flèche F1 sur les figures 1 et 3 à 8, le moyeu 10 tourne, par rapport aux rondelles de guidage 22, dans le sens circonférentiel opposé.

Dès lors, après son passage à sa position initiale, c'est le voile de moyeu 12 qu'il entraîne en rotation, suivant les flèches f2 des figures 8A, 8B, par ses dents 18, 18'.

Dans un premier temps, figure 8A, et comme précédemment, seuls cèdent d'abord élastiquement les organes élastiques 32A.

Dans un deuxième temps, figure 8B, les organes élastiques 32B cèdent à leur tour élastiquement, en ajoutant leurs effets à ceux des organes élastiques 32A, qui restent comprimés.

Pendant tout ce processus, les contre-voiles de moyeu 12' restent inactifs, compte tenu du jeu circonférentiel J1 correspondant, seul intervenant alors le voile de moyeu 12.

Comme précédemment, enfin, ce processus se poursuit jusqu'à ce qu'il se produise un appui positif, pour le sens circonférentiel concerné, entre les parties A, B, soit que l'un au moins des organes élastiques 32A, 32B vienne à nouveau à spires jointives, soit que l'une au moins des entretoises axiales 23 vienne au contact du bord d'extrémité circonférentielle correspondant de l'échancrure 24 du voile de moyeu 12 qu'elle traverse.

Dans ce qui précède, et pour simplification de l'exposé, il n'a pas été tenu compte du phénomène d'hystérésis se développant lors du débattement angulaire entre les parties A, B en raison des frottements entre celles-ci.

Ainsi qu'on le sait, un tel phénomène d'hystérésis conduit à une différenciation, pour un débattement angulaire donné, entre la valeur de couple correspondant à une évolution croissante de celui-ci et celle correspondant à son évolution décroissante.

Quoi qu'il en soit, il ressort de ce ui précède que le jeu circonférentiel J1 doit être supérieur au jeu circonférentiel J2, et que celui-ci doit lui-même être supérieur au jeu circonférentiel J3.

Bien entendu, la présente invention ne se limite pas à la forme de réalisation décrite et représentée, mais englobe toute variante d'exécution.

Par exemple, et si désiré, les contre-voiles de moyeu peuvent être solidarisés en rotation l'un à l'autre par des entretoises axiales, celles-ci traversant avec un jeu approprié le voile de moyeu auquel ils sont associés.

En outre, le nombre de parties coaxiales montées rotatives les unes par rapport aux autres que comporte le dispositif amortisseur de torsion concerné peut être supérieur à deux.

Enfin, le domaine d'application de l'invention ne se limite pas nécessairement à celui des seules frictions d'embrayages, mais peut aussi bien s'étendre par exemple à celui des dispositifs amortisseurs de torsion qui, dépourvus de tout disque de friction, sont mis en œuvre en tant que filtres pour les vibrations, au sein de quelconques transmissions à variante continue.

## Revendications

1. Dispositif amortisseur de torsion, notamment pour véhicule automobile, du genre comportant au moins deux parties coaxiales (A, B) montées rotatives l'une par rapport à l'autre dans les limites d'un débattement angulaire déterminé et à l'encontre de moyens élastiques, dits moyens élastiques à action circonférentielle, aptes à agir circonférentiellement entre elles pour une plage au moins d'un tel débattement angulaire, à savoir une première partie (A) comportant, d'une part, un moyeu (10), et, d'autre part, un flasque (12), communément dit voile de moyeu, qui forme une pièce annulaire autour du moyeu (10), et qui, pour un sens circonférentiel au moins, est solidaire en rotation dudit moyeu (10), et une deuxième partie (B) comportant elle-même au moins un flasque (22) communément dit rondelle de guidage, qui forme lui aussi une pièce annulaire autour du moyeu (10), mais qui est libre en rotation par rapport à celui-ci, tant dans un sens circonférentiel que dans le sens circonférentiel opposé, caractérisé en ce que, au flasque constituant le voile de moyeu (12) de la première partie (A), il est associé au moins un autre flasque (12'), dit ici par simple commodité contre-voile de moyeu, qui, comme ledit voile de moyeu (12), forme une pièce annulaire autour du moyeu (10) et est solidaire en rotation de celui-ci pour un sens circonférentiel au moins, en ce que, suivant une disposition alternée, ledit voile de moyeu (12) et ledit contre-voile de moyeu (12') sont l'un et l'autre libres en rotation par rapport au moyeu (10) dans le sens circonférentiel opposé à celui pour lequel ils sont chacun respectivement solidaires en rotation de celui-ci, en sorte que, pour un sens circonférentiel, ledit voile de moyeu (12) est solidaire en rotation du moyeu (10) tandis que le contre-voile de moyeu (12') est libre en rotation par rapport à celui-ci, et que, inversement, pour le sens circonférentiel opposé au précédent, ledit voile de moyeu (12) est libre en rotation par rapport au moyeu (10) tandis que ledit contre-voile de moyeu (12') est solidaire en rotation de celui-ci, et en ce que les moyens élastiques à action circonférentielle mis en œuvre sont aptes à agir entre le contre-voile de moyeu (12') et la rondelle de guidage (22) aussi bien qu'entre le voile de moyeu (12) et cette rondelle de guidage (22).

2. Dispositif amortisseur de torsion suivant la revendication 1, caractérisé en ce que les moyens élastiques à action circonférentielle mis en œuvre comportant des organes élastiques (32A, 32B) qui sont logés pour partie dans des évidements (33A et 33'A, 33B et 33'B) du voile de moyeu (12) et du contre-voile de moyeu (12') et pour partie dans des évidements (34A, 34B) de la ou des rondelles de guidage (22), pour l'un au moins desdits organes élastiques (32A) les évidements (33A et 33'A) du voile de moyeu (12) et du contre-voile de moyeu (12') ont un même développement circonférentiel que celui de l'évidement (34A) correspondant de la ou des rondelles de guidage (22) tandis que, pour un autre au moins desdits organes élastiques (32B) les évidements (33B et 33'B) du voile de moyeu (12) et du contre-voile de moyeu (12') ont un développement circonférentiel supérieur à celui de l'évidement (34B) correspondant de la ou des rondelles de guidage (22), en sorte que, pour la configuration de repos de l'ensemble et pour un sens circonférentiel au moins, c'est avec un jeu circonférentiel (J3) que ledit autre organe élastique (32B) est engagé dans les évidements (33B et 33'B) concernés du voile de moyeu (12) et du contre-voile de moyeu (12').

3. Dispositif amortisseur de torsion suivant l'une quelconque des revendications 1, 2, caractérisé en ce que, des moyens d'engrènement à jeu (17, 17') étant prévus entre, d'une part, le moyeu (10) et le voile de moyeu (12), et, d'autre part, ledit moyeu (10) et le contre-voile de moyeu (12'), pour la configuration de repos de l'ensemble, les moyens d'engrènement à jeu (17) entre le moyeu (10) et le voile de moyeu (12) sont en butée circonférentielle pour un sens circonférentiel, et conjointement, les moyens d'engrènement à jeu (17') entre ledit moyeu (10) et le contre-voile de moyeu (12') sont en butée circonférentielle pour le sens circonférentiel opposé au précédent.

4. Dispositif amortisseur de torsion suivant la revendication 3, caractérisé en ce que les moyens d'engrènement à jeu (17) prévus entre le moyeu (10) et le voile de moyeu (12) comportent, pour le moyeu (10), au moins une dent (18), et, pour le voile de moyeu (12), au moins une échancrure (19), par laquelle ledit voile de moyeu (12) est engagé avec jeu sur ladite dent (18), les moyens d'engagement à jeu (17') prévus entre le moyeu (10) et le contre-voile de moyeu (12') comportent, pour le moyeu (10), au moins une dent (18'), et, pour le contre-voile de moyeu (12'), au moins une échancrure (19'), par laquelle ledit contre-voile de moyeu (12') est engagé avec jeu sur ladite dent (18'), et, pour son engagement, avec jeu, sur la dent (18') du moyeu (10), le voile de moyeu (12) présente une échancrure (20), les échancrures (19, 20) que présente ainsi ledit voile de moyeu (12) ayant même développement circonférentiel et étant globalement en position diamétralement opposées l'une par rapport à l'autre.

5. Dispositif amortisseur de torsion suivant la revendication 4, caractérisé en ce que le contre-voile de moyeu (12') présente également, en positions globalement diamétralement opposées l'une par rapport à l'autre, deux échancrures (19', 20') de même développement circonférentiel.

6. Dispositif amortisseur de torsion suivant l'une quelconque des revendications 1 à 5, caractérisé en ce que, la partie (B) comportant deux rondelles de guidage (22) qui, disposées chacune respectivement de part et d'autre du voile de moyeu (12) et du contre-voile de moyeu (12') sont solidarisées l'une avec l'autre par des entretoises axiales (23) traversant avec jeu des échancrures (24, 24') dudit voile de moyeu (12) et dudit contre-voile de moyeu (12'), chacune desdites échancrures (24, 24') est, pour la configuration de repos de l'ensemble, en contact, par l'un de ses bords d'extrémité circonférentielle, de l'entretoise axiale (23) qui la traverse, ce bord d'extrémité circonférentielle étant, pour un sens circonférentiel, le bord aval pour le voile de moyeu (12) et, suivant une disposition alternée, le bord amont pour le contre-voile de moyeu (12′).

7. Dispositif amortisseur de torsion suivant l'une quelconque des revendications 1 à 6, caractérisé en ce qu'il y a deux contre-voiles de moyeu (12′), disposés chacun respectivement de part et d'autre du voile de moyeu (12).

8. Dispositif amortisseur de torsion suivant la revendication 7, caractérisé en ce que le voile de moyeu (12) et les contre-voiles de moyeu (12′) ont une même découpe.

**Claims**

1. A torsion damping device, particularly for an automotive vehicle, of the kind comprising at least two coaxial parts (A, B) which are mounted so as to be rotatable with respect to each other within the limits of a predetermined range of angular displacement against the action of circumferentially acting resilient biassing means, said resilient biassing means being adapted for mutual circumferential action over at least part of such an angular displacement, the said coaxial parts comprising a first part (A) including on the one hand a hub (10) and on the other hand a radial flange (12), commonly called the hub plate, which is in the form of an annular member surrounding the hub (10) and which is fixed with respect to the said hub (10) for rotation therewith in at least one circumferential direction, and a second said part (B) which itself includes at least one radial flange (22), commonly called a guide ring, which is also in the form of an annular member surrounding the hub (10), but which is freely rotatable with respect to the latter, as much in one circumferential direction as in the opposite circumferential direction, the torsion damping device being characterised in that the radial flange constituting the hub plate (12) of the said first part (A) has associated with it at least one further flange (12′), which is referred to here for convenience as the hub counter plate and which, like the said hub plate (12), is in the form of an annular member surrounding the hub (10) and fixed with respect to the latter for rotation therewith in at least one circumferential direction; and in that, in an alternative arrangement, the said hub plate (12) and the said hub counter plate (12′) are both freely rotatable with respect to the hub (10) in the circumferential direction opposite to the direction of rotation for which they are each respectively fixed with respect to the hub for rotation therewith, the arrangement being such that, in one circumferential direction, the said hub plate (12) is fixed with respect to the hub (10) for rotation therewith while the hub counter plate (12′) is freely rotatable with respect to the hub, and such that, conversely, in the opposite circumferential direction, the said hub plate (12) is freely rotatable with respect to the hub (10) while the said hub counter plate (12′) is rotatable with the hub, and in that the circumferentially acting resilient biassing means are adapted so as, in operation, to act between the hub counter plate (12′) and the guide ring (22) as well as between the hub plate (12) and the said guide ring (22).

2. A torsion damping device according to Claim 1, characterised in that the circumferentially acting resilient biassing means comprise resilient members (32A, 32B) which are mounted partly within openings (33A and 33′A, 33B and 33′B) in the hub plate (12) and in the hub counter plate (12′), and partly within openings (34A, 34B) of the guide ring or rings (22), the openings (33A and 33′A) of the hub plate (12) and of the hub counter plate (12′), for at least one of the said resilient members (32A), having a circumferential development which is the same as that of the corresponding opening (34A) of the said guide ring or rings (22), while, for at least one other of the said resilient members (32B), the openings (33B and 33′B) of the hub plate (12) and of the hub counter plate (12′) have a circumferential development which is greater than that of the corresponding opening (34B) of the guide ring or rings (22), the arrangement being such that, when the assembly is at rest and in at least one circumferential direction, the said other resilient member (32B) is engaged, in the openings (33B and 33′B) concerned of the hub plate (12) and of the hub counter plate (12′), with a circumferential clearance (J3).

3. A torsion damping device according to either one of Claims 1 and 2, characterised in that meshing means (17, 17′) are provided on the one hand between the hub (10) and the hub plate (12), and on the other hand between the said hub (10) and the hub counter plate (12′), the meshing means (17) between the hub (10) and the hub plate (12) being, when the assembly is at rest, in circumferential abutting engagement in one circumferential direction while, in the same way, the meshing means (17′) between the said hub (10) and the hub counter plate (12′) are in circumferential abutting engagement in the opposite circumferential direction.

4. A torsion damping device according to Claim 3, characterised in that the meshing means (17) which are provided between the hub (10) and the hub plate (12) include, at least one tooth (18) provided on the hub (10) and at least one recess (19) provided on the hub plate (12), by means of which the said hub plate (12) is engaged with the said tooth (18) with a clearance, the meshing means (17′) which are provided between the hub (10) and the hub counter plate (12′) comprising at least one tooth (18′) provided on the hub (10) and at least one recess (19′) provided on the hub counter plate (12′), by means of which the said hub counter plate (12′) is engaged with the said tooth (18′) with a clearance, while the hub plate (12), has a recess (20) for its engagement with the tooth (18′) of the hub (10) with the said clearance, the recesses (19, 20) which the said hub plate (12) thus possesses having the same circumferential development and being generally diametrically opposed to each other.

5. A torsion damping device according to Claim 4, characterised in that the hub counter plate (12′) also has, in positions which are generally diametrically opposed to each other, two recesses (19′, 20′) having the same circumferential development.

6. A torsion damping device according to any one of Claims 1 to 5, characterised in that the said part (B) includes two guide rings (22) which are respectively disposed on either side of the hub plate (12) and of the hub counter plate (12′), the said guide rings being fixed with respect to each other by means of axially extending spacer means (23) which extend, with clearance, across the recesses (24, 24′) of the said hub plate (12) and of the said hub counter plate (12′), each of the said recesses (24, 24′) being, when the assembly is at rest, in contact through one of its circumferential terminal edges with the axially extending spacer (23) which extends through that recess, this circumferential terminal edge being, in one circumferential direction the down-stream edge of the hub plate (12), and in an alternative disposition, the up-stream edge of the hub counter plate (12′).

7. A torsion damping device according to any one of Claims 1 to 6, characterised in that there are two hub counter plates (12′), each of which is disposed respectively on either side of the hub plate (12).

8. A torsion damping device according to Claim 7, characterised in that the hub plate (12) and the hub counter plates (12′) have the same configuration.

## Patentansprüche

1. Drehschwingungsdämpfer, insbesondere für Kraftfahrzeug, der Art, das über wenigstens zwei koaxiale Teile (A, B) verfügt, welche innerhalb der Grenzen eines bestimmten Winkelbereichs im Verhältnis zueinander drehbar und gegen elastische Elemente angebracht sind, wobei die erwähnten elastischen Elemente am Umfang wirken und geeignet sind, untereinander am Umfang innerhalb eines Bereichs, der wenigstens dem eines solchen Winkelbereichs entspricht, wirksam zu werden, und zwar ein erster Teil (A), der einerseits eine Nabe (10) und andererseits einen Flansch (12) aufweist, der üblicherweise als Nabenschale bezeichnet wird, der ein ringförmiges Stück rund um die Nabe (10) bildet und der wenigstens in einer Richtung des Umfanges drehbar fest mit der erwähnten Nabe (10) verbunden ist, und ein zweiter Teil (B), der ebenfalls wenigstens einen Flansch (22) aufweist, welcher üblicherweise als Führungsscheibe bezeichnet wird, der ebenfalls rund um die Nabe (10) ein ringförmiges Stück bildet, der jedoch dieser gegenüber frei rotieren kann, sowohl in Richtung des Umfanges als auch in entgegengesetzter Umfangsrichtung, dadurch gekennzeichnet, dass dem Flansch, der die Nabenschale (12) des ersten Teils (A) bildet, wenigstens ein weiterer Flansch (12′) zugeordnet ist, der hier der Einfachheit halber als Naben-Gegenschale bezeichnet wird und der, ebenso wie die erwähnte Nabenschale (12), rund um die Nabe (10) ein ringförmiges Stück bildet und drehbar in wenigstens einer Umfangsrichtung fest mit dieser verbunden ist, weiterhin dadurch gekennzeichnet, dass die erwähnte Nabenschale (12) und die erwähnte Naben-Gegenschale (12′) jeweils im Verhältnis zur Nabe (10) in der Richtung des Umfangs frei drehbar sind, die der Richtung entgegengesetzt ist, in der sie jeweils drehbar fest mit dem Stück verbunden sind, so dass die erwähnte Nabenschale (12) in einer Umfangsrichtung drehbar fest mit der Nabe (10) verbunden ist, während die Naben-Gegenschale (12′) im Verhältnis dazu frei drehbar ist, und dass umgekehrt in der dieser Richtung entgegengesetzten Umfangsrichtung die erwähnte Nabenschale (12) im Verhältnis zur Nabe (10) frei drehbar ist, während die erwähnte Naben-Gegenschale (12′) drehbar fest damit verbunden ist, und dadurch gekennzeichnet, dass die verwendeten elastischen, am Umfang angreifenden Elemente geeignet sind, zwischen der Naben-Gegenschale (12′) und der Führungsscheibe (22) sowie zwischen der Nabenschale (12) und dieser Führungsscheibe (22) wirksam zu werden.

2. Drehschwingungsdämpfer gemäss Anspruch 1, dadurch gekennzeichnet, dass die verwendeten, am Umfang wirkenden elastischen Elemente über elastische Organe (32A, 32B) verfügen, die teilweise in Aussparungen (33A und 33′A, 33B und 33′B) der Nabenschale (12) und der Naben-Gegenschale (12′) und teilweise in Aussparungen (34A, 34B) der Führungsscheibe(n) (22) angeordnet sind, und dass wenigstens für eines der erwähnten elastischen Organe (32A) die Aussparungen (33A und 33′A) der Nabenschale (12) und der Naben-Gegenschale (12′) den gleichen Umfang aufweisen wie die Aussparung (34A) entsprechend der (den) Führungsscheibe(n) (22), während für wenigstens ein weiteres der erwähnten elastischen Organe (32B) die Aussparungen (33B und 33′B) der Nabenschale (12) und der Naben-Gegenschale (12′) einen grösseren Umfang aufweisen als die Aussparung (34B) entsprechend der (den) Führungsscheibe(n) (22), so dass bei Ruhestellung der gesamten Einheit und für wenigstens eine Umfangsrichtung das erwähnte andere elastische Organ (32) mit einem Umfangsspiel (J3) in die betreffenden Aussparungen (33B und 33′B) der Nabenschale (12) und der Naben-Gegenschale (12′) eingreift.

3. Drehschwingungsdämpfer gemäss einem der Ansprüche 1, 2, dadurch gekennzeichnet, dass mit Spiel versehene Eingriffselemente (17, 17′) zwischen der Nabe (10) und der Nabenschale (12) einerseits und der erwähnten Nabe (10) und der Naben-Gegenschale (12′) andererseits vorgesehen sind und dass die mit Spiel versehenen Eingriffselemente (17) zwischen der Nabe (10) und der Nabenschale (12), während sich die gesamte Einheit in Ruhestellung befindet, am Umfang in einer Richtung einen Anschlag bilden und gleichzeitig die mit Spiel versehenen Eingriffselemente (17′) zwischen der erwähnten Nabe (10) und der Naben-Gegenschale (12′) in der entge-

gengesetzten Umfangsrichtung am Umfang einen Anschlag bilden.

4. Drehschwingungsdämpfer gemäss Anspruch 3, dadurch gekennzeichnet, dass die zwischen der Nabe (10) und der Nabenschale (12) vorgesehenen, mit Spiel versehenen Eingriffselemente für die Nabe (10) wenigstens einen Zahn (18) und für die Nabenschale (12) wenigstens einen bogenförmigen Ausschnitt (19) aufweisen, mit dessen Hilfe die erwähnte Nabenschale (12) mit einem Spiel am erwähnten Zahn (18) eingreift, und dass die zwischen der Nabe (10) und der Naben-Gegenschale (12′) vorgesehenen, mit Spiel versehenen Eingriffselemente (17′) für die Nabe (10) wenigstens einen Zahn (18′) und für die Naben-Gegenschale (12′) wenigstens einen bogenförmigen Ausschnitt (19′) aufweisen, wodurch die erwähnte Naben-Gegenschale (12′) mit Spiel am erwähnten Zahn (18′) eingreift, und dass die Nabenschale (12) für den Eingriff mit Spiel am Zahn (18′) der Nabe (10) eine Aussparung (20) aufweist, wobei die Aussparungen (19, 20), die diese Nabenschale (12) aufweist, den gleichen Kreisumfang zeigen und im wesentlichen einander diametral entgegengesetzt angeordnet sind.

5. Drehschwingungsdämpfer gemäss Anspruch 4, dadurch gekennzeichnet, dass die Naben-Gegenschale (12′) in im wesentlichen einander entgegengesetzten Positionen auch zwei Aussparungen (19′, 20′) mit gleicher Umfangsabwicklung aufweist.

6. Drehschwingungsdämpfer gemäss einem der Ansprüche 1 bis 5, dadurch gekennzeichnet, dass der Teil (B) zwei Führungsscheiben (22) besitzt, die jeweils auf einer Seite der Nabenschale (12) und der Naben-Gegenschale (12′) angeordnet sind und miteinander fest durch Längsstege (23) verbunden sind, die mit einem Spiel durch die Aussparungen (24, 24′) der erwähnten Nabenschale (12) und der erwähnten Naben-Gegenschale (12′) verlaufen, wobei jede der erwähnten Aussparungen (24, 24′) bei Ruhestellung der gesamten Einheit mit einem ihrer Ränder am Umfang mit dem quer hindurchverlaufenden Längssteg (23) in Kontakt ist, wobei dieser Rand am Umfang in Umfangsrichtung den unteren Rand für die Nabenschale (12) und in einer abgeänderten Anordnung den oberen Rand für die Naben-Gebenschale (12′) bildet.

7. Drehschwingungsdämpfer gemäss einem der Ansprüche 1 bis 6, dadurch gekennzeichnet, dass zwei Naben-Gegenschalen (12′) vorhanden sind, die jeweils auf einer Seite der Nabenschale (12) angeordnet sind.

8. Drehschwingungsdämpfer gemäss Anspruch 7, dadurch gekennzeichnet, dass die Nabenschale (12) und die Naben-Gegenschalen (12′) den gleichen Schnittvorgang (découpe) aufweisen.

# FIG.1

# FIG.2

# FIG.4

# FIG.5

# FIG.3

FIG.6

FIG.7A

FIG.7B

FIG.8A

FIG.8B